# EUROPEAN PATENT SPECIFICATION

(11) **EP 0 588 611 B1**
(45) Date of publication and mention of the grant of the patent: **20.08.1997**
(21) Application number: 93307265.4
(22) Date of filing: 15.09.1993
(51) Int. Cl.: G01K 11/12

(54) **Thermometer for optical fibre**
Fiberoptisches Thermometer
Thermomètre à fibres optiques

(30) Priority: 16.09.1992 JP 272365/92
(43) Date of publication of application: 23.03.1994
(73) Proprietor: ANDO ELECTRIC CO., LTD., Tokyo 144 (JP); SUMITOMO ELECTRIC INDUSTRIES, LIMITED, Osaka 541 (JP)
(72) Inventor: Adachi, Shoji, c/o ANDO ELECTRIC CO. LTD., Ota-ku, Tokyo (JP); Nozaki, Takeshi, c/o ANDO ELECTRIC CO. LTD., Ota-ku, Tokyo (JP); Wakami, Toshinori, c/o YOKOHAMA WORKS OF SUMITOMO, Yokohama-shi, Kanagawa-ken (JP)
(74) Representative: Rackham, Stephen Neil

(56) References cited:
- EP-A- 0 213 872
- EP-A- 0 256 280
- GB-A- 2 140 554
- PATENT ABSTRACTS OF JAPAN, vol. 15, no. 205 (P-1206) 27 May 1991; & JP-A-03 053 135
- PATENT ABSTRACTS OF JAPAN, vol. 13, no. 391 (P-926) 30 August 1989; & JP-A-01 140 030
- PATENT ABSTRACTS OF JAPAN, vol. 15, no. 84 (P-1172) 27 February 1991; & JP-A-02 300 643
- PATENT ABSTRACTS OF JAPAN, vol. 14, no. 333 (P-1078) 18 July 1990; & JP-A-02 114 136

## Description

The present invention relates to a thermometer for optical fibre using the Raman scattered light from it.

According to this invention, a thermometer comprises:
a continuous light source;
an acousto-optical switch providing an optical path between said continuous source of light and an optical fibre the temperature of which is to be determined, said acousto-optical switch having a primary diffraction side input, an output and a zero order optical terminal, the primary diffraction side input receiving light from said continuous source, and said output being connected to the optical fibre;
a wavelength separating optical filter having an input optically connected to the zero order optical terminal, the zero order optical terminal allowing Raman scattered light from the optical fibre to pass to said wavelength separating optical filter, said wavelength separating optical filter filtering the Raman scattered light; and,
a data processor optically connected to an output of said wavelength separating optical filter and determining the temperature of the optical fibre from the ratio of the intensity of the Stokes light to the anti-Stokes light of the scattered light.

Since the acousto-optical switch serves as both a continuous light cutting off switch and a directional coupler, the thermometer in accordance with this invention can reduce an optical circuit loss of 3 dB or more than a prior art thermometer to be discussed subsequently and increases the dynamic range of temperature determination of the optical fibre.

Prior art thermometers of this type use a pulsed laser as a light source and are disclosed e.g. in JP-A-3 053 135 or JP-A-1 140 030.

A particular embodiment of a thermometer in accordance with this invention will now be described and contrasted with the prior art with reference to the accompanying drawings, in which:-
Figure 1 is a diagram of the arrangement of a thermometer for optical fibre according to an embodiment of the present invention;
Figure 2 is a diagram of the arrangement of a prior art thermometer for optical fibre;
Figure 3 is a graph of intensity to wavelength characteristics of wavelength components of a back scattering light;
Figure 4 is a diagram of the arrangement of a prior art optical-fibre amplifier; and
Figure 5 is a graph of waveforms of output lights of the optical-fibre amplifier of Figure 4.

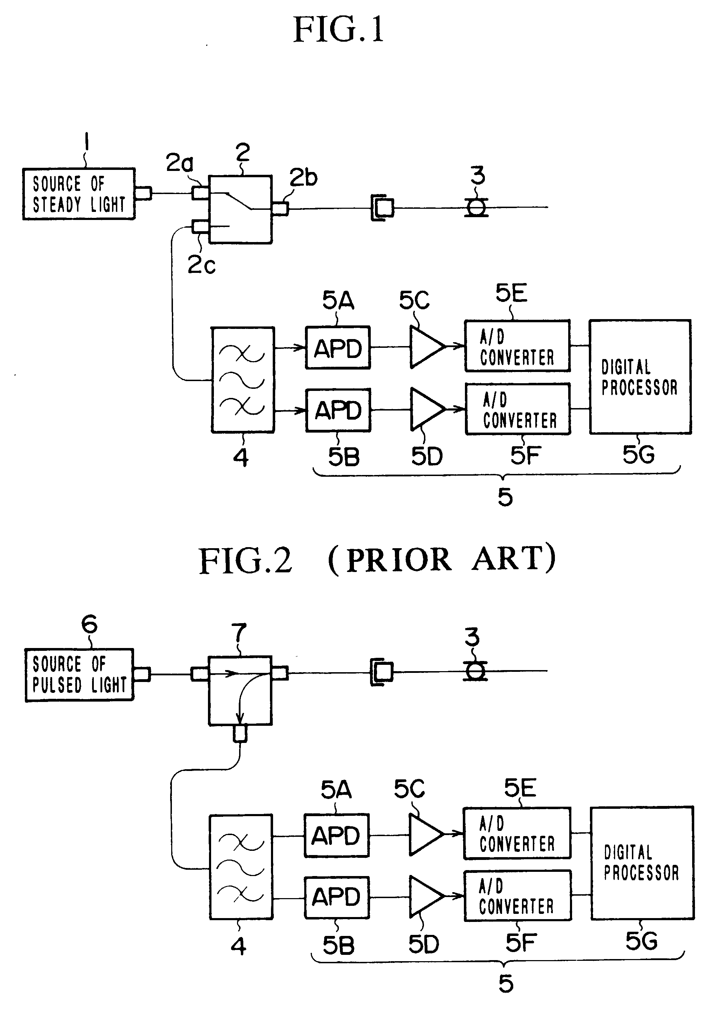

Figure 2 shows the arrangement of a prior art thermometer for optical fibre. An optical fibre the temperature of which is to be determined is indicated at 3. The thermometer for optical fibre comprises a wavelength separating optical filter 4, a data processor 5, a pulsed light source 6 and a directional coupler 7. A pulsed light from the pulsed light source 6 is transmitted to the optical fibre 3 through the directional coupler 7. A back scattering light from the optical fibre 3 passes to the optical filter 4 through the directional coupler 7. The optical filter 4 separates the back scattering light into the Stokes line or light and the anti-Stokes line or light of the Raman scattering light.

The data processor 5 comprises avalanche photodiodes (APDs) 5A and 5B, amplifiers 5C and 5D, A/D converters 5E and 5F and digital processor 5G. The data processor 5 is connected to an output of the optical filter 4. The APDs 5A and 5B photo-electrically convert outputs of the optical filter 4. The amplifiers 5C and 5D amplify outputs of the APDs 5A and 5B. The A/D converters 5E and 5F convert analog outputs of the amplifiers 5C and 5D into digital signals. The digital processor 5G determines the temperature of the optical fibre 3 from a Stokes light intensity to anti-Stokes light intensity ratio.

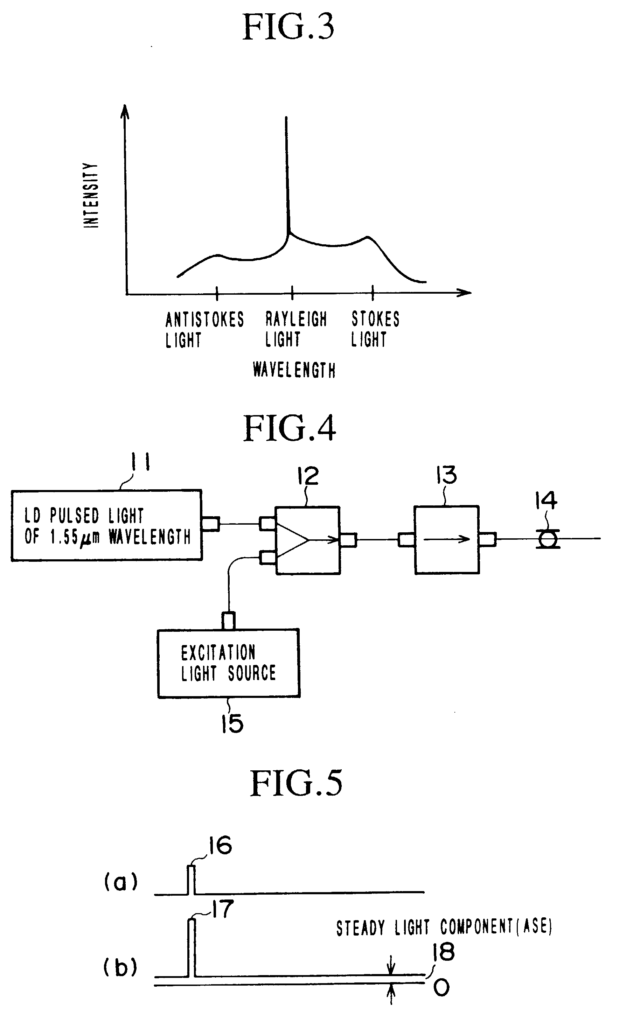

Figure 3 shows intensity to wavelength characteristics of wavelength components of the back scattering light. The determination of the temperature of the optical fibre 3 employs the anti-Stokes light and the Stokes light of the Raman scattering light. In a case of Figure 3, the wavelength of the Rayleigh light is 1.55 µm, the wavelength of the Stokes light is 1.66 µm and the wavelength of the anti-Stokes light is 1.45 µm.

The intensities of the anti-Stokes light and the Stokes light are 25 to 30 dB or more lower than that of the Rayleigh light, so that the thermometer for optical fibre employs a source of relatively high power pulsed light. For wavelengths of 0.8 µm and 1.3 µm, a laser diode (LD) and a solid laser produce relatively high power pulsed lights. There is now no source of a relatively high power pulsed light for a wavelength of 1.55 µm, so that an optical fibre amplifier is often times employed as part of a source of a pulsed light of that wavelength.

Figure 4 shows the arrangement of the optical fibre amplifier. Figure 5 is a graph of waveforms of outputs of the optical fibre amplifier of Figure 4. The optical fibre amplifier comprises an LD source 11 of the pulsed light of the wavelength of 1.5 µm, a wavelength multiplexer 12, an isolator 13, an erbium-doped fibre 14 and an excitation light source 15. As shown in Figure 5, when the pulsed light source 11 emits a pulsed light 16, the erbium-doped fibre 14 produces an amplified pulsed light 17 and a steady light component 18 comprising ASE and a transmitted component of an excitation light from the excitation light source 15.

When the signal shown in Figure 5 (b) is transmitted to the optical fibre 3, it is required to provide an optical switch passing only the pulsed light 17 at the output of the erbium-doped fibre 14 and neglecting a variation in the level of the steady light component 18. The provision of the optical switch degrades the optical output of a pulsed light source and increases a cost.

Since the prior art thermometer for optical fibre using the Raman scattering light employs the same principle of operation as a pulsed light tester, it requires the provision of the pulsed light source. However, for providing a source of such light comprising the steady light component, e.g. Amplified Spontaneous Emission (ASE) as an output light from an optical amplifier with an Er³⁺- doped fibre, the provision of an optical switch producing the pulsed light is required. The provision of such optical switch degrades the level of output of the pulsed light source.

Figure 1 shows the arrangement of an inventive thermometer for optical fibre using the Raman scattering light from an optical fibre the temperature of which is to be determined. The thermometer for optical fibre comprises a source 1 of a relatively high power steady light and an acousto-optical switch 2 in place of the source 6 of the pulsed light and the directional coupler 7 in Figure 2. The acousto-optical switch is provided intermediate an optical path between the source 1 of the relatively high power steady light and the optical fibre 3.

The acousto-optical switch 2 has a primary diffraction side input 2a, an output 2b and a zero order optical terminal 2c. The primary diffraction side input 2a receives a steady light from the source 1 of the relatively high power steady light. The output 2b of the acousto-optical switch 2 is connected to the optical fibre 3. The zero order optical terminal 2c allows Raman scattering light from the optical fibre 3 to pass to an optical filter 4.

The thermometer for optical fibre also comprises an optical filter 4 and a data processor 5. The optical filter 4 has an input optically connected to the zero order optical terminal 2c and filters the Raman scattering light. The data processor 5 comprises APDs 5A and 5B, amplifiers 5C and 5D, A/D converters 5E and 5F and digital processor 5G. The data processor 5 is connected to an output of the optical filter 4. The APDs 5A and 5B photo-electrically concert outputs of the optical filter 4. The amplifiers 5C and 5D amplify outputs of the APDs 5A and 5B. The A/D converters 5E and 5F convert analog outputs of the amplifiers 5D and 5D into digital signals. The digital processor 5G determines the temperature of the optical fibre 3 from a Stokes light intensity to anti-Stokes light intensity ratio.

The primary diffraction optical path of the acousto-optical switch 2 has a relatively high isolation when the acousto-optical switch 2 is turned on and turned off, so that the acousto-optical switch 2 is turned on only when the acousto-optical switch 2 transmits a pulsed light produced from the steady light from the source 1 of the relatively high power steady light to the optical fibre 3. (For example, the isolation of the primary diffraction optical path of the acousto-optical switch 2 is an order of 50 dB). Thus, no unnecessary steady light component can be transmitted to the optical fibre 3. The Raman scattering light from the optical fibre 3 passes to the optical filter 4 through the zero order diffraction optical path of the acousto- optical switch 2. The Raman scattering light shifts to a longer wavelength side and a shorter wavelength side of the wavelength of the pulsed light from the acousto-optical switch 2. Since the zero order diffraction optical path of the acousto-optical switch 2 has no wavelength characteristic or dependency, it is appropriate to a wave guide for the Raman scattering light. An embodiment of the present invention employing an acousto-optical switch having an output in the form of a photo-receptacle is applicable to the determination of multi-mode and single-mode optical fibre.

## Claims

1. A thermometer for an optical fibre, comprising:
a continuous light source (1);
an acousto-optical switch (2) providing an optical path between said continuous source (1) of light and an optical fibre (3) the temperature of which is to be determined, said acousto-optical switch (2) having a primary diffraction side input (2a), an output (2b) and a zero order optical terminal (2c), the primary diffraction side input receiving light from said continuous source (1), and said output (2b) being connected to the optical fibre (3);
a wavelength separating optical filter (4) having an input optically connected to the zero order optical terminal (2c), the zero order optical terminal (2c) allowing Raman scattered light from the optical fibre (3) to pass to said wavelength separating optical filter (4), said wavelength separating optical filter (4) filtering the Raman scattered light; and,
a data processor (5) optically connected to an output of said wavelength separating optical filter and determining the temperature of the optical fibre (3) from the ratio of the intensity of the Stokes light to the anti-Stokes light of the scattered light.

## Patentansprüche

1. Ein faseroptisches Thermometer, umfassend:
eine kontinuierliche Lichtquelle (1);
einen akustooptischen Schalter (2), der einen optischen Weg zwischen der genannten kontinuierlichen Lichtquelle (1) und einer optischen Faser (3) bereitstellt, deren Temperatur bestimmt werden soll, wobei der genannte akustooptische Schalter (2) einen primären Beugungsseiteneingang (2a), einen Ausgang (2b) und einen optischen Anschluss (2c) nullter Ordnung aufweist, der primäre Beugungsseiteneingang Licht von der genannten kontinuierlichen Quelle (1) erhält, und der genannte Ausgang (2b) mit der optischen Faser (3) verbunden ist;
ein optisches Wellenlängentrennfilter (4), das einen Eingang hat, der optisch mit dem optischen Anschluss (2c) nullter Ordnung verbunden ist, wobei der optische Anschluss (2c) nullter Ordnung ermöglicht, dass Raman gestreutes Licht von der optischen Faser (3) zu dem genannten optischen Wellenlängentrennfilter (4) gelangt, wobei das genannte optische Wellenlängentrennfilter (4) das Raman gestreute Licht filtert; und
einen Datenprozessor (5), der optisch mit einem Ausgang des genannten optischen Wellenlängentrennfilters verbunden ist, und die Temperatur der optischen Faser (3) aus dem Verhältnis der Intensität des Stokes-Lichts zu dem Anti-Stokes-Licht des gestreuten Lichts bestimmt.

## Revendications

1. Thermomètre pour fibre optique, comprenant:
une source continue (1) de lumière;
un commutateur acoustico-optique (2) fournissant un parcours optique entre ladite source continue (1) de lumière et une fibre optique (3) dont la température doit être déterminée, ledit commutateur acoustico-optique (2) présentant une entrée latérale (2a) à diffraction primaire, une sortie (2b) et une borne optique (2c) d'ordre zéro, l'entrée latérale à diffraction primaire recevant la lumière de ladite source continue (1) et ladite sortie (2b) étant reliée à la fibre optique (3);
un filtre optique (4) de séparation des longueurs d'onde, dont une entrée est reliée optiquement à la borne optique (2c) d'ordre zéro, la borne optique (2c) d'ordre zéro laissant passer vers ledit filtre optique (4) de séparation des longueurs d'onde une lumière diffusée Raman provenant de la fibre optique (3), ledit filtre optique (4) de séparation des longueurs d'onde filtrant la lumière diffusée Raman; et
un dispositif de traitement de données (5) relié optiquement à une sortie dudit filtre optique de séparation des longueurs d'onde et déterminant la température de la fibre optique (3) à partir du rapport de l'intensité de la lumière Stokes par rapport à celle de la lumière anti-Stokes de la lumière diffusée.
